# EUROPEAN PATENT APPLICATION

(11) **EP 4 734 246 A1**
(43) Date of publication of application: **29.04.2026**
(21) Application number: 24825051.6
(22) Date of filing: 14.05.2024
(51) Int. Cl.: H01M 50/172

(54) **ELECTROCHEMICAL APPARATUS AND ELECTRIC DEVICE**

(30) Priority: 21.06.2023 CN 202310744977
(71) Applicant: Ningde Amperex Technology Limited, Ningde, Fujian 352100 (CN)
(72) Inventor: YANG, Jianhui, Ningde, Fujian 352100 (CN); LOU, Jiaxin, Ningde, Fujian 352100 (CN); ZHANG, Guowen, Ningde, Fujian 352100 (CN)
(74) Representative: Dehns Germany Partnerschaft mbB
(86) International application number: PCT/CN2024/093100
(87) International publication number: WO 2024/260154

(57) **Abstract**

The present application provides an electrochemical apparatus and an electric device. The electrochemical apparatus includes a housing and an electrode lead-out assembly, a first through hole is provided on a wall portion of the housing, the electrode lead-out assembly includes an electrode terminal, a connecting piece, and at least one sealing member, the connecting piece is a metal piece, the connecting piece is connected to the wall portion, a second through hole is provided on the connecting piece, the electrode terminal runs through the second through hole, and the sealing member is disposed between the connecting piece and the electrode terminal. This can reduce the processing difficulty of the electrode lead-out assembly, improve the versatility of the electrode lead-out assembly, and enhance the sealing effect of the electrochemical apparatus.

## Description

### CROSS-REFERENCE TO RELATED APPLICATIONS

The present application claims priority to Chinese Patent Application No. CN202310744977.3, filed on June 21, 2023 and entitled "ELECTROCHEMICAL APPARATUS AND ELECTRIC DEVICE," the entire contents of which are incorporated herein by reference.

### TECHNICAL FIELD

The present application relates to the field of battery technologies, and more particularly, to an electrochemical apparatus and an electric device.

### BACKGROUND

In recent years, with the rapid development of new energy technologies, batteries have been widely used in fields such as electronic devices, electric vehicles, electric bicycles, and electric tools. The requirements for battery quality and reliability are becoming increasingly stringent. Therefore, optimizing battery quality has become an urgent issue to be addressed at present.

### SUMMARY

The present application provides an electrochemical apparatus and an electric device, where poles have low processing difficulty, good versatility, and the electrochemical apparatus has a good sealing effect.

According to a first aspect, the present application provides an electrochemical apparatus, including:
a housing, where a first through hole is provided on a wall portion of the housing; and
an electrode lead-out assembly, where the electrode lead-out assembly includes an electrode terminal, a connecting piece, and at least one sealing member, the connecting piece is a metal piece, the connecting piece is connected to the wall portion, a second through hole is provided on the connecting piece, the electrode terminal runs through the second through hole, and the sealing member is disposed between the connecting piece and the electrode terminal.

In the above technical solution, the electrochemical apparatus includes the housing and the electrode lead-out assembly, the first through hole is provided on the wall portion of the housing, the electrode lead-out assembly includes the electrode terminal, the connecting piece, and the at least one sealing member, the connecting piece is a metal piece, and the connecting piece is connected to the wall portion. In this way, the electrode lead-out assembly can be directly installed on the housing, and the electrode lead-out assembly has low preparation and installation difficulty and better versatility. The second through hole is provided on the connecting piece, the electrode terminal runs through the second through hole, and the sealing member is disposed between the connecting piece and the electrode terminal, enabling the sealing member to seal the electrode lead-out assembly. The connection between the connecting piece and the wall portion can seal the housing and the electrode lead-out assembly, thereby resulting in a good sealing effect for the electrochemical apparatus.

In some embodiments, a passivation layer is formed on a surface of the connecting piece, and the sealing member is bonded to the passivation layer.

In the above technical solution, by forming the passivation layer on the surface of the connecting piece and bonding the sealing member to the passivation layer, a bonding key can be formed between the sealing member and the passivation layer, thereby resulting in a better sealing effect between the sealing member and the connecting piece. In addition, the passivation layer can slow down the corrosion speed of the connecting piece, thereby extending the service life of the connecting piece.

In some embodiments, the electrode terminal includes a first conductive member, a second conductive member, and a third conductive member, the first conductive member is located on a first side of the connecting piece along a thickness direction thereof, the second conductive member is located on a second side of the connecting piece along the thickness direction thereof opposite to the first side, the third conductive member runs through the second through hole, and the third conductive member is electrically connected to the first conductive member and the second conductive member; and
the sealing member includes a first sealing member and a second sealing member, the first sealing member is disposed between the first conductive member and the connecting piece, and the second sealing member is disposed between the second conductive member and the connecting piece.

In the above technical solution, the electrode terminal includes the first conductive member, the second conductive member, and the third conductive member, the first conductive member is located on the first side of the connecting piece along the thickness direction thereof, enabling electrical connection to other components located on the first side of the connecting piece. The second conductive member is located on the second side of the connecting piece along the thickness direction thereof opposite to the first side, enabling electrical connection to other components located on the second side of the connecting piece. The third conductive member runs through the second through hole, and the third conductive member is electrically connected to the first conductive member and the second conductive member, enabling a component electrically connected to the first conductive member and a component electrically connected to the second conductive member to achieve electrical connection. The sealing member includes the first sealing member and the second sealing member, and the first sealing member is disposed between the first conductive member and the connecting piece, enabling sealing between the first conductive member and the connecting piece. The second sealing member is disposed between the second conductive member and the connecting piece, enabling sealing between the second conductive member and the connecting piece. With the two sealing members: the first sealing member and the second sealing member provided, the reliability of the sealing can be improved.

In some embodiments, the first conductive member and the third conductive member are integrally formed, a insertion hole is provided on the second conductive member, and a portion of the third conductive member is inserted into the insertion hole, and is electrically connected to the second conductive member within the insertion hole.

In the above technical solution, by integrally forming the first conductive member and the third conductive member, the overall structure of the first conductive member and the third conductive member can be more stable, and the preparation process of the electrode terminal is simpler. By providing the insertion hole on the second conductive member, the portion of the third conductive member is inserted into the insertion hole and electrically connected to the second conductive member within the insertion hole, enabling the connection between the second conductive member and the third conductive member through insertion, and making it difficult for the second conductive member to displace relative to the third conductive member. This results in a more stable overall structure of the electrode terminal, and higher reliability of the electrical connection between the second conductive member and the third conductive member.

In some embodiments, the third conductive member includes a first portion and a second portion that are connected, the first portion is inserted into the insertion hole, the second portion is located between the first portion and the first conductive member, a cross-sectional area of the first portion is smaller than a cross-sectional area of the second portion, so that a step surface is formed between the first portion and the second portion, and the second conductive member abuts against the step surface.

In the above technical solution, the third conductive member includes the first portion and the second portion that are connected, the first portion is inserted into the insertion hole, the second portion is located between the first portion and the first conductive member, the cross-sectional area of the first portion is smaller than the cross-sectional area of the second portion, so that the step surface is formed between the first portion and the second portion, and the second conductive member abuts against the step surface, enabling the distance between the second conductive member and the first conductive member to be fixed. When the second conductive member is inserted into the third conductive member, this can ensure sufficient compression imposed by the second conductive member on the first sealing member and the second sealing member to achieve a good sealing effect, and reduce the possibility of affecting the sealing effect, which is caused by the structure of the first sealing member and the second sealing member being excessively compressed and thus damaged by the second conductive member.

In some embodiments, the third conductive member has a first end surface facing away from the first conductive member, the second conductive member has a second end surface facing away from the first conductive member, and the first end surface is flush with the second end surface.

In the above technical solution, the third conductive member has the first end surface facing away from the first conductive member, and the second conductive member has the second end surface facing away from the first conductive member. By making the first end surface flush with the second end surface, when the second side of the electrode terminal is electrically connected to other components, the first end surface and the second end surface can both serve as connection surfaces, resulting in a larger connection surface area, greater connection force with other components, and better reliability.

In some embodiments, the first conductive member and the third conductive member are integrally formed, the third conductive member has a first end surface facing away from the first conductive member, the second conductive member has a third end surface facing toward the first conductive member, and the first end surface fits with the third end surface to achieve electrical connection.

In the above technical solution, by integrally forming the first conductive member and the third conductive member, the overall structure of the first conductive member and the third conductive member can be more stable, and the preparation process of the electrode terminal is simpler. The third conductive member has the first end surface facing away from the first conductive member, the second conductive member has the third end surface facing toward the first conductive member, and the first end surface fits with the third end surface to achieve electrical connection, enabling electrical connection between the second conductive member and the third conductive member through fitting. This can simplify the assembly process of the second conductive member and the third conductive member, improving the preparation efficiency of the electrode lead-out assembly.

In some embodiments, the first conductive member is disposed on an inner side of the wall portion; or
the first conductive member is disposed on an outer side of the wall portion.

In the above technical solution, by disposing the first conductive member on the inner side of the wall portion, the first end surface of the third conductive member facing away from the first conductive member and the second conductive member can be exposed to the housing to achieve electrical connection to other components. By disposing the first conductive member on the outer side of the wall portion, the first conductive member can be exposed to the housing to achieve electrical connection to other components.

In some embodiments, a first insertion hole is provided on the first conductive member, a second insertion hole is provided on the second conductive member, a portion of the third conductive member is inserted into the first insertion hole and electrically connected to the first conductive member within the first insertion hole, and a portion of the third conductive member is inserted into the second insertion hole and electrically connected to the second conductive member within the second insertion hole.

In the above technical solution, achieving the connection between the first conductive member and the third conductive member and the connection between the second conductive member and the third conductive member through insertion can make it difficult for the first conductive member and the second conductive member to displace relative to the third conductive member, resulting in a more stable overall structure of the electrode terminal, and higher reliability of the electrical connection between the first conductive member and the third conductive member and higher reliability of the electrical connection between the second conductive member and the third conductive member.

In some embodiments, the first sealing member and/or the second sealing member extends into the second through hole.

In the above technical solution, by making the first sealing member and/or the second sealing member extend into the second through hole, the sealing connection area between the first sealing member and/or the second sealing member and the connecting piece can be increased, so that when the total sealing connection area between the first sealing member and/or the second sealing member and the connecting piece remains unchanged, the width of the first sealing member and/or the second sealing member in a direction perpendicular to the centerline of the second through hole can be set smaller. This can reduce the overall size of the electrode lead-out assembly in the direction perpendicular to the centerline of the second through hole, to adapt to a thinner housing, further improving the versatility of the electrode lead-out assembly.

In some embodiments, in a direction perpendicular to the centerline of the second through hole, a width of a portion of the connecting piece protruding from an outer peripheral surface of the first sealing member is S1, and a width of a portion of the connecting piece protruding from an outer peripheral surface of the second sealing member is S2, satisfying S1 ≥ 0.3 mm and S2 ≥ 0.3 mm.

In the above technical solution, in the direction perpendicular to the centerline of the second through hole, the width of the portion of the connecting piece protruding from the outer peripheral surface of the first sealing member is S1, and the width of the portion of the connecting piece protruding from the outer peripheral surface of the second sealing member is S2, satisfying S1 ≥ 0.3 mm and S2 ≥ 0.3 mm. Since the connecting piece is connected to the housing through the portion protruding from the outer peripheral surface of the first sealing member or the portion protruding from the outer peripheral surface of the second sealing member, by setting S1 and S2 to satisfy S1 ≥ 0.3 mm and S2 ≥ 0.3 mm, the connection between the connecting piece and the housing can be more stable and reliable. If S1 and S2 are small (for example, less than 0.3 mm), the connection area between the connecting piece and the housing is small, which may lead to poor connection reliability, poor sealing between the connecting piece and the housing, and issues such as external moisture entering the housing or electrolyte inside the housing leaking out.

In some embodiments, in an overlapping region of the first conductive member and the connecting piece, a width of the first sealing member is D1; and in an overlapping region of the second conductive member and the connecting piece, a width of the second sealing member is D2, satisfying 0.2 mm ≤ D1 ≤ 1.5 mm, and 0.2 mm ≤ D2 ≤ 1.5 mm.

In the above technical solution, in the overlapping region of the first conductive member and the connecting piece, the width of the first sealing member is D1; and in the overlapping region of the second conductive member and the connecting piece, the width of the second sealing member is D2, satisfying 0.2 mm ≤ D1 ≤ 1.5 mm, and 0.2 mm ≤ D2 ≤ 1.5 mm. This first can enable a good sealing effect of the first sealing member and the second sealing member, reducing the risk of electrolyte leakage for the electrochemical apparatus, and second can allow for a shorter pressure relief path for the electrochemical apparatus during thermal runaway, improving the pressure relief sensitivity of the electrochemical apparatus, and reducing the space occupied by the first sealing member and the second sealing member. If D1 and D2 are small (for example, less than 0.2 mm), the sealing width of the first sealing member and the second sealing member is small, resulting in poor sealing effect and a risk of electrolyte leakage for the electrochemical apparatus. If D1 and D2 are large (for example, greater than 1.5 mm), the length of the pressure relief path of the electrochemical apparatus is increased, resulting in lower pressure relief sensitivity of the electrochemical apparatus, and increasing the space occupied by the first sealing member and the second sealing member.

In some embodiments, 0.3 mm ≤ D1 ≤ 1 mm, and 0.3 mm ≤ D2 ≤ 1 mm.

In the above technical solution, setting 0.3 mm ≤ D1 ≤ 1 mm, and 0.3 mm ≤ D2 ≤ 1 mm can further ensure a good sealing effect of the first sealing member and the second sealing member while reducing the length of the pressure relief path of the electrochemical apparatus during thermal runaway, improving the pressure relief sensitivity of the electrochemical apparatus, and reducing the space occupied by the first sealing member and the second sealing member.

In some embodiments, the sealing member includes a first adhesive layer, a second adhesive layer, and a third adhesive layer sequentially stacked, the first adhesive layer is connected to the connecting piece, the third adhesive layer is connected to the electrode terminal, and melting points of the first adhesive layer and the third adhesive layer are lower than a melting point of the second adhesive layer.

In the above technical solution, by providing the first adhesive layer, the second adhesive layer, and the third adhesive layer sequentially stacked, connecting the first adhesive layer to the connecting piece, connecting the third adhesive layer to the electrode terminal, and making the melting points of the first adhesive layer and the third adhesive layer lower than the melting point of the second adhesive layer, when the sealing member is activated by high temperature, the first adhesive layer can melt to fit with the connecting piece, the third adhesive layer can melt to fit with the electrode terminal, and the second adhesive layer does not melt, avoiding excessive melting of the sealing member that could affect the installation of the sealing member and reducing the amount of adhesive overflow of the sealing member. Moreover, during thermal runaway of the electrochemical apparatus, both the first adhesive layer and the third adhesive layer can melt to form a pressure relief channel, improving the pressure relief sensitivity of the electrochemical apparatus, while the second adhesive layer is less likely to melt, reducing the amount of adhesive overflow of the sealing member.

In some embodiments, a thickness of the sealing member is H, satisfying 0.05 mm ≤ H ≤ 1 mm, a thickness of the first adhesive layer is H1, a thickness of the second adhesive layer is H2, and a thickness of the third adhesive layer is H3, satisfying H1:H2:H3 = 1:0.5 to 3:1.

In the above technical solution, the thickness of the sealing member is H, satisfying 0.05 mm ≤ H ≤ 1 mm, which can ensure that the sealing member is not easily damaged, not easily permeable to water, and the electrochemical apparatus has a good pressure relief effect during thermal runaway. If H is small (for example, less than 0.05 mm), the sealing member is prone to damage and has high water permeability, which makes it likely for moisture to penetrate into the housing, affecting the internal structure of the housing. If H is large (for example, greater than 1 mm), the sealing member is difficult to melt during thermal runaway of the electrochemical apparatus, resulting in lower pressure relief sensitivity of the electrochemical apparatus.

By making the thickness H1 of the first adhesive layer, the thickness H2 of the second adhesive layer, and the thickness H3 of the third adhesive layer satisfy H1:H2:H3 = 1:0.5 to 3:1, first the second adhesive layer can provide good support for the first adhesive layer and the third adhesive layer, and second, the space occupied by the sealing member can be small, thereby allowing for a small volume of the portion of the electrode lead-out assembly protruding from the housing, and thus reducing the space occupied by the electrochemical apparatus. Additionally, this can ensure good adhesion force between the first adhesive layer and the connecting piece and between the second adhesive layer and the electrode terminal, resulting in good sealing performance of the electrochemical apparatus.

In some embodiments, the sealing member includes a first adhesive layer and a second adhesive layer that are stacked, the first adhesive layer is connected to the connecting piece, the second adhesive layer is connected to the electrode terminal, and a melting point of the first adhesive layer is lower than a melting point of the second adhesive layer.

In the above technical solution, by providing the first adhesive layer and the second adhesive layer that are stacked, connecting the first adhesive layer to the connecting piece, connecting the second adhesive layer to the electrode terminal, and making the melting point of the first adhesive layer lower than the melting point of the second adhesive layer, during thermal runaway of the electrochemical apparatus, the first adhesive layer can melt to form a pressure relief channel, allowing for high pressure relief sensitivity of the electrochemical apparatus, while the second adhesive layer is less likely to melt, reducing the amount of adhesive overflow of the sealing member.

In some embodiments, the sealing member includes a single adhesive layer, the adhesive layer is connected to the connecting piece and the electrode terminal, and a melting point of the adhesive layer is T, satisfying 100°C ≤ T ≤ 130°C.

In the above technical solution, by providing the single adhesive layer, connecting the adhesive layer to both the connecting piece and the electrode terminal, and making the melting point T of the adhesive layer satisfy 100°C ≤ T ≤ 130°C, it is easy for the adhesive layer to be activated by high temperature to melt so as to fit with both the connecting piece and the electrode terminal. Moreover, during thermal runaway of the electrochemical apparatus, the adhesive layer melts, and a pressure relief channel can be formed on both the side of the adhesive layer fitting with the connecting piece and the side of the adhesive layer fitting with the electrode terminal, allowing for higher pressure relief sensitivity of the electrochemical apparatus.

According to a second aspect, the present application further provides an electric device, including the electrochemical apparatus described above, where the electrochemical apparatus is configured to provide electric energy.

### BRIEF DESCRIPTION OF DRAWINGS

To more clearly illustrate the technical solutions in the embodiments of the present application, the drawings used in the description of the embodiments will be briefly introduced below. It should be understood that the drawings below only show some embodiments of the present application and should not be considered as limiting the scope. For those skilled in the art, other related drawings can be obtained based on these drawings.
FIG. 1 is a schematic structural diagram of an electrochemical apparatus provided in some embodiments of the present application;
FIG. 2 is a schematic cross-sectional structural diagram of the electrochemical apparatus shown in FIG. 1 along line A-A;
FIG. 3 is a schematic partial enlarged structural diagram at B of the electrochemical apparatus shown in FIG. 2;
FIG. 4 is a schematic structural diagram of an electrode lead-out assembly provided in some embodiments of the present application;
FIG. 5 is a schematic cross-sectional structural diagram of an electrode lead-out assembly provided in some embodiments of the present application;
FIG. 6 is a schematic exploded structural diagram of an electrode lead-out assembly provided in some embodiments of the present application;
FIG. 7 is a schematic cross-sectional structural diagram of an electrode lead-out assembly provided in some embodiments of the present application;
FIG. 8 is a schematic cross-sectional structural diagram of an electrode lead-out assembly provided in some embodiments of the present application;
FIG. 9 is a schematic partial enlarged structural diagram of an electrochemical apparatus provided in some embodiments of the present application;
FIG. 10 is a schematic cross-sectional structural diagram of an electrode lead-out assembly provided in some embodiments of the present application;
FIG. 11 is a schematic cross-sectional structural diagram of an electrode lead-out assembly provided in some embodiments of the present application;
FIG. 12 is a schematic structural diagram of a sealing member provided in some embodiments of the present application; and
FIG. 13 is a schematic cross-sectional structural diagram of a sealing member provided in some embodiments of the present application.

Reference signs: 10-electrochemical apparatus; 100-housing; 110-first through hole; 200-electrode lead-out assembly; 210-electrode terminal; 211-first conductive member; 212-second conductive member; 2121-insertion hole; 2122-second end surface; 213-third conductive member; 2131-first portion; 2132-second portion; 2133-step surface; 2134-first end surface; 214-third conductive member; 215-second conductive member; 216-third conductive member; 217-first conductive member; 218-third conductive member; 220-connecting piece; 221-second through hole; 231-first sealing member; 2311-first adhesive layer; 2312-second adhesive layer; 2313-third adhesive layer; 232-second sealing member; 233-first sealing member; and 234-second sealing member.

### DETAILED DESCRIPTION

To make the objectives, technical solutions, and advantages of the present application clearer, the technical solutions in the embodiments of the present application will be clearly described below in conjunction with the drawings in the embodiments of the present application. Obviously, the described embodiments are some but not all embodiments of the present application. Based on the embodiments in the present application, all other embodiments obtained by those skilled in the art fall within the scope of protection of the present application.

Unless otherwise defined, all technical and scientific terms used in the present application have the same meaning as commonly understood by those skilled in the technical field of the present application; the terms used in the specification of the present application are only for the purpose of describing specific embodiments and are not intended to limit the present application; the terms "include" and "have" in the specification, claims, and the above description of the drawings of the present application, as well as any variations thereof, are intended to cover non-exclusive inclusion. The terms "first," "second," and the like in the specification and claims or the above drawings of the present application are used to distinguish different objects, not to describe a specific order or primary-secondary relationship.

The term "and/or" in the present application is merely an association relationship describing associated objects, indicating that three relationships may exist, for example, A and/or B may indicate: A alone, A and B together, or B alone. In addition, the character "/" in the present application generally indicates an "or" relationship between the associated objects before and after.

In the embodiments of the present application, the same reference signs denote the same components, and for brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are for illustrative purposes only and should not constitute any limitation to the present application.

The electrochemical apparatus includes a housing, an electrode assembly, and an electrolyte. The housing is configured to accommodate the electrode assembly and the electrolyte. The electrode assembly consists of a positive electrode plate, a negative electrode plate, and a separator. The cell operates primarily by the movement of metal ions between the positive electrode plate and the negative electrode plate. The positive electrode plate includes a positive electrode current collector and a positive electrode active material layer, the positive electrode active material layer is applied on a surface of the positive electrode current collector, and a portion of the positive electrode current collector not coated with the positive electrode active material layer serves as a positive electrode tab to input or output electric energy of the positive electrode plate through the positive electrode tab. Taking a lithium-ion battery as an example, the material of the positive electrode current collector may be aluminum, and the positive electrode active material may be lithium cobaltate, lithium iron phosphate, ternary materials, lithium manganate, or the like. The negative electrode plate includes a negative electrode current collector and a negative electrode active material layer, the negative electrode active material layer is applied on a surface of the negative electrode current collector, and a portion of the negative electrode current collector not coated with the negative electrode active material layer serves as a negative electrode tab to input or output electric energy of the negative electrode plate through the negative electrode tab. The material of the negative electrode current collector may be copper, and the negative electrode active material may be a carbon material or a silicon material, or the like.

The material of the separator may be polypropylene (PP) or polyethylene (PE), or the like. In addition, the electrode assembly may be a wound structure or a laminated structure, which is not limited in the embodiments of the present application.

The electrochemical apparatus further includes a pole running through the housing, one end of the pole is electrically connected to the electrode assembly, and another other end is exposed to the housing, enabling the electrochemical apparatus to achieve electrical connection to other apparatuses through the pole.

Currently, the installation of a pole in an electrochemical apparatus generally involves providing a through hole on a housing and disposing an inner sealing ring and an outer sealing ring on two sides of the through hole, respectively, so that the pole sequentially runs through the inner sealing ring, the through hole of the housing, and the outer sealing ring, and the pole is fixed to the housing through riveting. However, due to the small diameter of the pole shaft, the pole is prone to tilting during the riveting process, leading to poor sealing effect and high processing difficulty. Moreover, the size of the pole needs to match the size of the through hole of the housing, otherwise it will affect the sealing performance of the electrochemical apparatus, resulting in poor versatility of the pole.

Based on the above considerations, to address the issues of high pole processing difficulty, poor versatility, and poor sealing effect of the part where the pole is disposed in the electrochemical apparatus, the present application provides an electrochemical apparatus, where the electrochemical apparatus includes a housing and an electrode lead-out assembly. A first through hole is provided on a wall portion of the housing, the electrode lead-out assembly includes an electrode terminal, a connecting piece, and at least one sealing member, the connecting piece is a metal piece, the connecting piece is connected to the wall portion, a second through hole is provided on the connecting piece, the electrode terminal runs through the second through hole, and the sealing member is disposed between the connecting piece and the electrode terminal.

In the electrochemical apparatus with this structure, the cell lead-out assembly includes an electrode terminal, a connecting piece, and at least one sealing member, with a simple structure and easy preparation. The cell lead-out assembly can be used as a standard component, adaptable to a housing where the size of the first through hole is less than or equal to the size of the connecting piece, offering good versatility. After the cell lead-out assembly is prepared, quality testing is performed, reducing the cost of defective products of electrochemical apparatuses. When the cell lead-out assembly is installed on the housing, it only requires connecting the connecting piece to the housing, with low installation difficulty. The connecting piece used for connecting the cell lead-out assembly to the housing is a metal piece, and the metal piece is directly connected to the housing, resulting in good sealing performance of the cell lead-out assembly and the housing.

An embodiment of the present application provides an electric device using the electrochemical apparatus as a power source. The electric device may include, but is not limited to, mobile phones, tablets, laptops, electric toys, electric tools, electric bicycles, electric vehicles, ships, spacecraft, or the like.

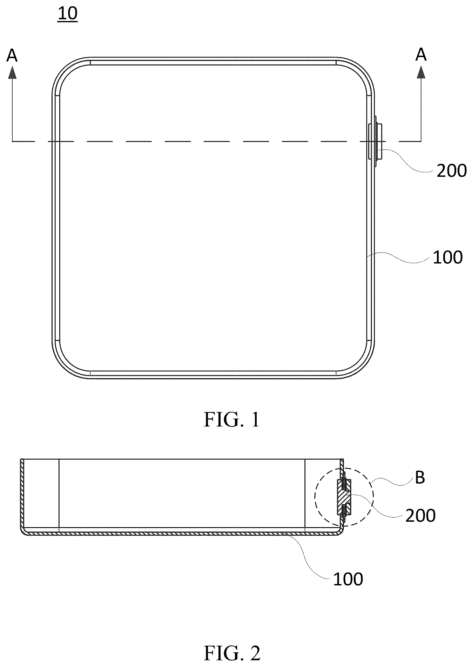

It should be noted that each electrochemical apparatus may be a secondary battery or a primary battery. For example, it may be a lithium-ion battery, a sodium-ion battery, or a magnesium-ion battery, but is not limited thereto. The cell may be cylindrical, flat, rectangular, or of other shapes. For example, in FIG. 1, FIG. 1 is a schematic structural diagram of an electrochemical apparatus provided in some embodiments of the present application, where the electrochemical apparatus 10 has a rectangular structure.

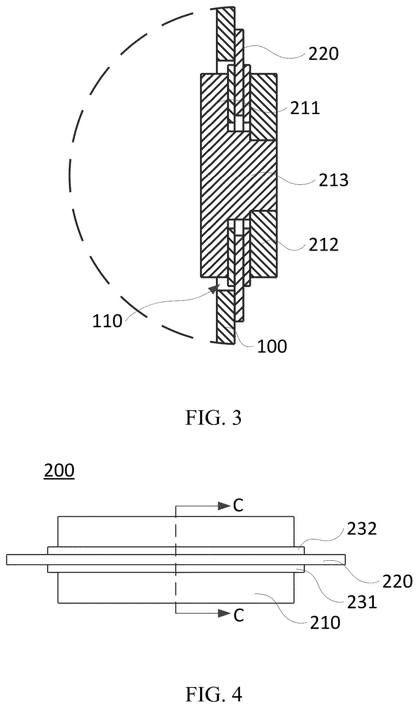

Referring to FIG. 1 to FIG. 3, FIG. 2 is a schematic cross-sectional structural diagram of the electrochemical apparatus shown in FIG. 1 along line A-A, and FIG. 3 is a schematic partial enlarged structural diagram at B of the electrochemical apparatus shown in FIG. 2. An embodiment of the present application provides an electrochemical apparatus 10, where the electrochemical apparatus 10 includes a housing 100 and an electrode lead-out assembly 200, a first through hole 110 is provided on a wall portion of the housing 100, the electrode lead-out assembly 200 includes an electrode terminal 210, a connecting piece 220, and at least one sealing member, the connecting piece 220 is a metal piece, the connecting piece 220 is connected to the wall portion, a second through hole 221 is provided on the connecting piece 220, the electrode terminal 210 runs through the second through hole 221, and the sealing member is disposed between the connecting piece 220 and the electrode terminal 210.

By providing the electrode lead-out assembly 200 and enabling the electrode lead-out assembly 200 to be directly installed on the housing 100 through the connection of the connecting piece 220 to the housing 100, electrical connection between the electrode assembly and other apparatuses is achieved with low installation difficulty. The connection of the connecting piece 220 to the wall portion enables the electrode lead-out assembly 200 to be adaptable to a housing 100 where the size of the first through hole 110 is less than or equal to the size of the connecting piece 220, offering good versatility. The electrode lead-out assembly 200 itself is sealed by the sealing member. The connecting piece 220 used for connecting the electrode lead-out assembly 200 to the housing 100 is a metal piece, and the metal piece is directly connected to the housing 100, achieving sealing between the electrode lead-out assembly 200 and the housing 100, thereby resulting in a good sealing effect for the electrochemical apparatus 10.

In some embodiments, a passivation layer is formed on a surface of the connecting piece 220, and the sealing member is bonded to the passivation layer.

Currently, in an electrochemical apparatus where a sealing member is provided between a pole and a housing to achieve sealing, improving the sealing between the sealing member and the housing requires passivation treatment of the entire housing, which is difficult and costly. In the present application, only the connecting piece 220 needs to undergo passivation treatment, which is less difficult and less costly. By forming the passivation layer on the surface of the connecting piece 220 and bonding the sealing member to the passivation layer, a bonding key can be formed between the sealing member and the passivation layer, resulting in a better sealing effect between the sealing member and the connecting piece 220. In addition, the passivation layer can slow down the corrosion speed of the connecting piece 220, thereby extending the service life of the connecting piece 220.

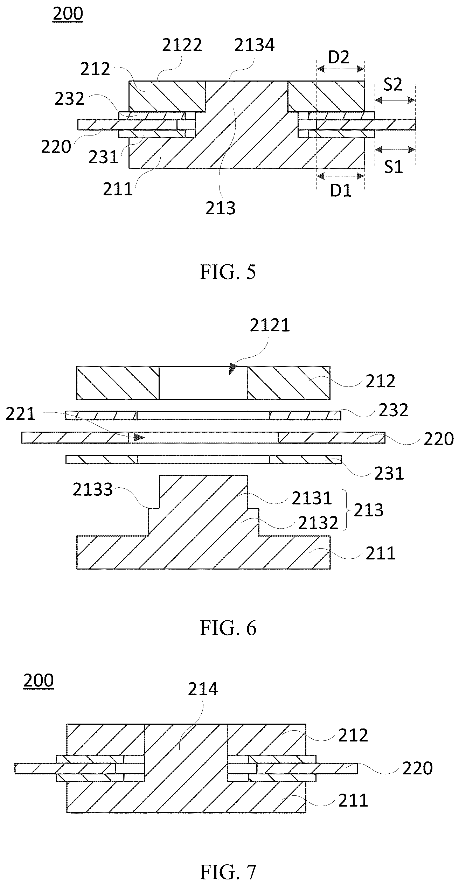

Referring to FIG. 4 to FIG. 6, FIG. 4 is a schematic structural diagram of an electrode lead-out assembly provided in some embodiments of the present application, FIG. 5 is a schematic cross-sectional structural diagram of an electrode lead-out assembly provided in some embodiments of the present application, and FIG. 6 is a schematic exploded structural diagram of an electrode lead-out assembly provided in some embodiments of the present application. In some embodiments, the electrode terminal 210 includes a first conductive member 211, a second conductive member 212, and a third conductive member 213, the first conductive member 211 is located on a first side of the connecting piece 220 along a thickness direction thereof, the second conductive member 212 is located on a second side of the connecting piece 220 along the thickness direction thereof opposite to the first side, the third conductive member 213 runs through the second through hole 221, and the third conductive member 213 is electrically connected to the first conductive member 211 and the second conductive member 212.

The electrode terminal 210 includes the first conductive member 211, the second conductive member 212, and the third conductive member 213, the first conductive member 211 is located on the first side of the connecting piece 220 along the thickness direction thereof, enabling electrical connection to other components located on the first side of the connecting piece 220. The second conductive member 212 is located on the second side of the connecting piece 220 along the thickness direction thereof opposite to the first side, enabling electrical connection to other components located on the second side of the connecting piece 220. The third conductive member 213 runs through the second through hole 221, and the third conductive member 213 is electrically connected to the first conductive member 211 and the second conductive member 212, enabling a component electrically connected to the first conductive member 211 and a component electrically connected to the second conductive member 212 to achieve electrical connection.

In some embodiments, the sealing member includes a first sealing member 231 and a second sealing member 232, the first sealing member 231 is disposed between the first conductive member 211 and the connecting piece 220, and the second sealing member 232 is disposed between the second conductive member 212 and the connecting piece 220.

The first sealing member 231 is disposed between the first conductive member 211 and the connecting piece 220, enabling sealing between the first conductive member 211 and the connecting piece 220. The second sealing member 232 is disposed between the second conductive member 212 and the connecting piece 220, enabling sealing between the second conductive member 212 and the connecting piece 220. With the two sealing members: the first sealing member 231 and the second sealing member 232 provided, the reliability of the sealing can be improved.

In some embodiments, the first conductive member 211 and the third conductive member 213 are integrally formed, a insertion hole 2121 is provided on the second conductive member 212, and a portion of the third conductive member 213 is inserted into the insertion hole 2121, and is electrically connected to the second conductive member 212 within the insertion hole 2121.

By integrally forming the first conductive member 211 and the third conductive member 213, the overall structure of the first conductive member 211 and the third conductive member 213 can be more stable, and the preparation process of the electrode terminal 210 is simpler. By providing the insertion hole 2121 on the second conductive member 212, the portion of the third conductive member 213 is inserted into the insertion hole 2121 and electrically connected to the second conductive member 212 within the insertion hole 2121, enabling the connection between the second conductive member 212 and the third conductive member 213 through insertion, and making it difficult for the second conductive member 212 to displace relative to the third conductive member 213. This results in a more stable overall structure of the electrode terminal 210, and higher reliability of the electrical connection between the second conductive member 212 and the third conductive member 213.

In some embodiments, the third conductive member 213 includes a first portion 2131 and a second portion 2132 that are connected, the first portion 2131 is inserted into the insertion hole 2121, the second portion 2132 is located between the first portion 2131 and the first conductive member 211, a cross-sectional area of the first portion 2131 is smaller than a cross-sectional area of the second portion 2132, so that a step surface 2133 is formed between the first portion 2131 and the second portion 2132, and the second conductive member 212 abuts against the step surface 2133.

The cross-section of the first portion 2131 is a cross-section of the first portion 2131 in a plane parallel to the thickness direction of the connecting piece 220, and the cross-section of the second portion 2132 is a cross-section of the second portion 2132 in a plane parallel to the thickness direction of the connecting piece 220.

The third conductive member 213 includes the first portion 2131 and the second portion 2132 that are connected, the first portion 2131 is inserted into the insertion hole 2121, the second portion 2132 is located between the first portion 2131 and the first conductive member 211, the cross-sectional area of the first portion 2131 is smaller than the cross-sectional area of the second portion 2132, so that the step surface 2133 is formed between the first portion 2131 and the second portion 2132, and the second conductive member 212 abuts against the step surface 2133, enabling the distance between the second conductive member 212 and the first conductive member 211 to be fixed. When the second conductive member 212 is inserted into the third conductive member 213, this can ensure sufficient compression imposed by the second conductive member 212 on the first sealing member 231 and the second sealing member 232 to achieve a good sealing effect, and reduce the possibility of affecting the sealing effect, which is caused by the structure of the first sealing member 231 and the second sealing member 232 being excessively compressed and thus damaged by the second conductive member 212.

Referring to FIG. 7, FIG. 7 is a schematic cross-sectional structural diagram of an electrode lead-out assembly provided in some embodiments of the present application. In some other embodiments, along the thickness direction of the connecting piece 220, the size of the third conductive member 214 in a direction perpendicular to the thickness direction of the connecting piece 220 remains unchanged, simplifying the preparation process of the third conductive member 214 and the assembly of the sealing member, the connecting piece 220, and the third conductive member 214.

Referring again to FIG. 4 to FIG. 6, in some embodiments, the third conductive member 213 has a first end surface 2134 facing away from the first conductive member 211, the second conductive member 212 has a second end surface 2122 facing away from the first conductive member 211, and the first end surface 2134 is flush with the second end surface 2122.

The third conductive member 213 has the first end surface 2134 facing away from the first conductive member 211, and the second conductive member 212 has the second end surface 2122 facing away from the first conductive member 211. By making the first end surface 2134 flush with the second end surface 2122, when the second side of the electrode terminal 210 (the side where the first end surface 2134 and the second end surface 2122 are located) is electrically connected to other components through fitting, the first end surface 2134 and the second end surface 2122 can both serve as connection surfaces, resulting in a larger connection surface area, greater connection force with other components, and better reliability.

The flushness of the first end surface 2134 and the second end surface 2122 can be understood broadly, that is, when the distance between the plane where the first end surface 2134 is located and the plane where the second end surface 2122 is located in the thickness direction of the connecting piece 220 is within an error range, the two end surfaces can be understood as being flush.

In some other embodiments, the first end surface 2134 may also be recessed relative to the second end surface 2122, so that when the second side of the electrode terminal 210 (the side where the first end surface 2134 and the second end surface 2122 are located) is electrically connected to other components through fitting, the second end surface 2122 can serve as a connection surface.

In some other embodiments, the first end surface 2134 may also protrude relative to the second end surface 2122, so that when the second side of the electrode terminal 210 (the side where the first end surface 2134 and the second end surface 2122 are located) is electrically connected to other components through fitting, the first end surface 2134 can serve as a connection surface.

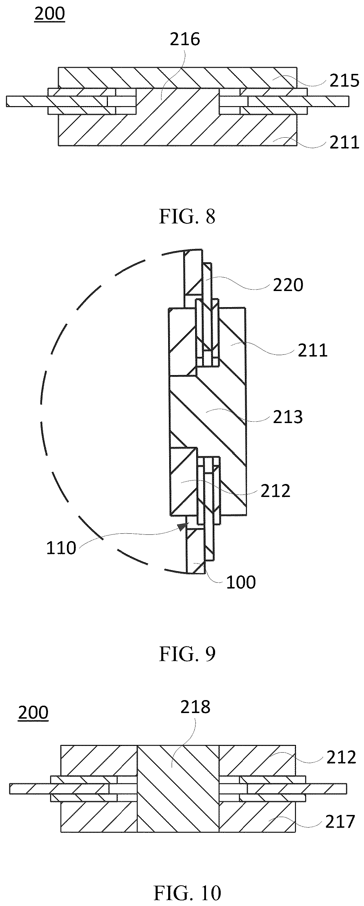

Referring to FIG. 8, FIG. 8 is a schematic cross-sectional structural diagram of an electrode lead-out assembly provided in some embodiments of the present application. In some embodiments, the first conductive member 211 and the third conductive member 216 are integrally formed, the third conductive member 216 has a first end surface facing away from the first conductive member 211, the second conductive member 215 has a third end surface facing toward the first conductive member 211, and the first end surface fits with the third end surface to achieve electrical connection.

By integrally forming the first conductive member 211 and the third conductive member 216, the overall structure of the first conductive member 211 and the third conductive member 216 can be more stable, and the preparation process of the electrode terminal 210 is simpler. The third conductive member 216 has the first end surface facing away from the first conductive member 211, the second conductive member 215 has the third end surface facing toward the first conductive member 211, and the first end surface fits with the third end surface to achieve electrical connection, enabling electrical connection between the second conductive member 215 and the third conductive member 216 through fitting. This can simplify the assembly process of the second conductive member 215 and the third conductive member 216, improving the preparation efficiency of the electrode lead-out assembly 200.

Referring again to FIG. 1 to FIG. 3, in some embodiments, the first conductive member 211 is disposed on an inner side of the wall portion.

By disposing the first conductive member 211 on the inner side of the wall portion, the first conductive member 211 can be electrically connected to the electrode assembly, so that the first end surface of the third conductive member 213 facing away from the first conductive member 211 and the second conductive member 212 can be exposed to the housing 100 to achieve electrical connection to other components.

Referring to FIG. 9, FIG. 9 is a schematic partial enlarged structural diagram of an electrochemical apparatus provided in some embodiments of the present application. In some other embodiments, the first conductive member 211 is disposed on an outer side of the wall portion.

By disposing the first conductive member 211 on the outer side of the wall portion, the second conductive member 212 and/or the third conductive member 213 can be electrically connected to the electrode assembly, so that the first conductive member 211 is exposed to the housing 100 to achieve electrical connection to other components.

Referring to FIG. 10, FIG. 10 is a schematic cross-sectional structural diagram of an electrode lead-out assembly provided in some embodiments of the present application. In some embodiments, a first insertion hole is provided on the first conductive member 217, a second insertion hole is provided on the second conductive member 212, a portion of the third conductive member 218 is inserted into the first insertion hole and electrically connected to the first conductive member 217 within the first insertion hole, and a portion of the third conductive member 218 is inserted into the second insertion hole and electrically connected to the second conductive member 212 within the second insertion hole.

Achieving the connection between the first conductive member 217 and the third conductive member 218 and the connection between the second conductive member 212 and the third conductive member 218 through insertion can make it difficult for the first conductive member 217 and the second conductive member 212 to displace relative to the third conductive member 218, resulting in a more stable overall structure of the electrode terminal 210, and higher reliability of the electrical connection between the first conductive member 217 and the third conductive member 218 and higher reliability of the electrical connection between the second conductive member 212 and the third conductive member 218.

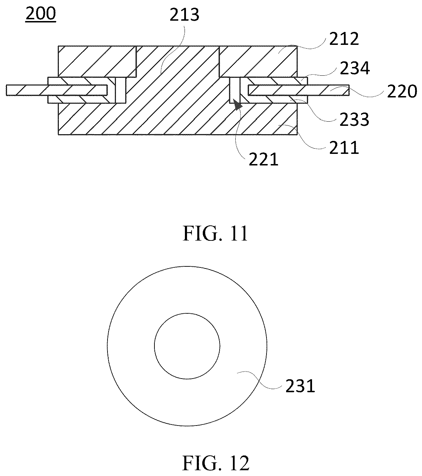

Referring to FIG. 11, FIG. 11 is a schematic cross-sectional structural diagram of an electrode lead-out assembly provided in some embodiments of the present application. In some embodiments, the first sealing member 233 and/or the second sealing member 234 extends into the second through hole 221.

By making the first sealing member 233 and/or the second sealing member 234 extend into the second through hole 221, the sealing connection area between the first sealing member 233 and/or the second sealing member 234 and the connecting piece 220 can be increased, so that when the total sealing connection area between the first sealing member 233 and/or the second sealing member 234 and the connecting piece 220 remains unchanged, the width of the first sealing member 233 and/or the second sealing member 234 in a direction perpendicular to the centerline of the second through hole 221 can be set smaller. This can reduce the overall size of the electrode lead-out assembly 200 in the direction perpendicular to the centerline of the second through hole 221, to adapt to a thinner housing 100, further improving the versatility of the electrode lead-out assembly 200.

In some embodiments, the first sealing member 233 and the second sealing member 234 are integrally formed, and after assembling the first sealing member 233, the second sealing member 234, the third conductive member 213, and the connecting piece 220, the structural stability is better, and the sealing connection area between the first sealing member 233 and the second sealing member 234 and the connecting piece 220 can be further increased.

Referring to FIG. 5, in some embodiments, in a direction perpendicular to a centerline of the second through hole 221, a width of a portion of the connecting piece 220 protruding from an outer peripheral surface of the first sealing member 231 is S1, and a width of a portion of the connecting piece 220 protruding from an outer peripheral surface of the second sealing member 232 is S2, satisfying S1 ≥ 0.3 mm and S2 ≥ 0.3 mm. For example, S1 may be 0.3 mm, 0.5 mm, 0.8 mm, or the like, and S2 may be 0.3 mm, 0.6 mm, 0.9 mm, or the like.

Since the connecting piece 220 is connected to the housing 100 through the portion protruding from the outer peripheral surface of the first sealing member 231 or the portion protruding from the outer peripheral surface of the second sealing member 232, by setting S1 and S2 to satisfy S1 ≥ 0.3 mm and S2 ≥ 0.3 mm, the connection between the connecting piece 220 and the housing 100 can be more stable and reliable. If S1 and S2 are small (for example, less than 0.3 mm), the connection area between the connecting piece 220 and the housing 100 is small, which may lead to poor connection reliability, poor sealing between the connecting piece 220 and the housing 100, and issues such as external moisture entering the housing 100 or electrolyte inside the housing 100 leaking out.

In some embodiments, in an overlapping region of the first conductive member 211 and the connecting piece 220, a width of the first sealing member 231 is D1; and in an overlapping region of the second conductive member 212 and the connecting piece 220, a width of the second sealing member 232 is D2, satisfying 0.2 mm ≤ D1 ≤ 1.5 mm, and 0.2 mm ≤ D2 ≤ 1.5 mm. For example, D1 may be 0.2 mm, 1 mm, or 1.5 mm, or the like, and D2 may be 0.2 mm, 0.8 mm, or 1.5 mm, or the like.

In the overlapping region of the first conductive member 211 and the connecting piece 220, the width of the first sealing member 231 is D1; and in the overlapping region of the second conductive member 212 and the connecting piece 220, the width of the second sealing member 232 is D2, satisfying 0.2 mm ≤ D1 ≤ 1.5 mm, and 0.2 mm ≤ D2 ≤ 1.5 mm. This first can enable a good sealing effect of the first sealing member 231 and the second sealing member 232, reducing the risk of electrolyte leakage for the electrochemical apparatus 10, and second can allow for a shorter pressure relief path for the electrochemical apparatus 10 during thermal runaway, improving the pressure relief sensitivity of the electrochemical apparatus 10, and reducing the space occupied by the first sealing member 231 and the second sealing member 232. If D1 and D2 are small (for example, less than 0.2 mm), the sealing width of the first sealing member 231 and the second sealing member 232 is small, resulting in poor sealing effect and a risk of electrolyte leakage for the electrochemical apparatus 10. If D1 and D2 are large (for example, greater than 1.5 mm), the length of the pressure relief path of the electrochemical apparatus 10 is increased, resulting in lower pressure relief sensitivity of the electrochemical apparatus 10, and increasing the space occupied by the first sealing member 231 and the second sealing member 232.

In some embodiments, 0.3 mm ≤ D1 ≤ 1 mm, and 0.3 mm ≤ D2 ≤ 1 mm, for example, D1 may be 0.3 mm, 0.7 mm, 1 mm, or the like, and D2 may be 0.3 mm, 0.6 mm, or 1 mm, or the like.

Setting 0.3 mm ≤ D1 ≤ 1 mm, and 0.3 mm ≤ D2 ≤ 1 mm can further ensure a good sealing effect of the first sealing member 231 and the second sealing member 232 while reducing the length of the pressure relief path of the electrochemical apparatus 10 during thermal runaway, improving the pressure relief sensitivity of the electrochemical apparatus 10, and reducing the space occupied by the first sealing member 231 and the second sealing member 232.

In some embodiments, the connecting piece 220 is welded to the wall portion.

By welding the connecting piece 220 to the wall portion, the sealing between the connecting piece 220 and the wall portion is good, reducing the likelihood of electrolyte leakage, and the connection force between the connecting piece 220 and the wall portion is high, making it difficult for the connecting piece 220 to detach from the housing 100.

In some embodiments, the connecting piece 220 and the wall portion may be laser welded.

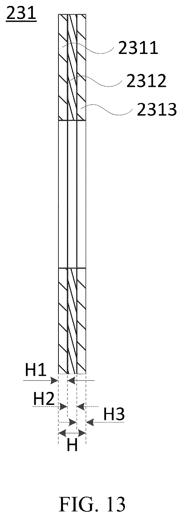

Referring to FIG. 12 and FIG. 13, FIG. 12 is a schematic structural diagram of a sealing member provided in some embodiments of the present application, and FIG. 13 is a schematic cross-sectional structural diagram of a sealing member provided in some embodiments of the present application. In some embodiments, the first sealing member 231 is used as an example for description. The first sealing member 231 includes a first adhesive layer 2311, a second adhesive layer 2312, and a third adhesive layer 2313 sequentially stacked, the first adhesive layer 2311 is connected to the connecting piece 220, the third adhesive layer 2313 is connected to the electrode terminal 210, and melting points of the first adhesive layer 2311 and the third adhesive layer 2313 are lower than a melting point of the second adhesive layer 2312.

By providing the first adhesive layer 2311, the second adhesive layer 2312, and the third adhesive layer 2313 sequentially stacked, connecting the first adhesive layer 2311 to the connecting piece 220, connecting the third adhesive layer 2313 to the electrode terminal 210, and making the melting points of the first adhesive layer 2311 and the third adhesive layer 2313 lower than the melting point of the second adhesive layer 2312, when the first sealing member 231 is activated by high temperature, the first adhesive layer 2311 can melt to fit with the connecting piece 220, the third adhesive layer 2313 can melt to fit with the electrode terminal 210, and the second adhesive layer 2312 does not melt, avoiding excessive melting of the first sealing member 231 that could affect the installation of the first sealing member 231 and reducing the amount of adhesive overflow of the first sealing member 231. Moreover, during thermal runaway of the electrochemical apparatus 10, both the first adhesive layer 2311 and the third adhesive layer 2313 can melt to form a pressure relief channel, improving the pressure relief sensitivity of the electrochemical apparatus 10, while the second adhesive layer 2312 is less likely to melt, reducing the amount of adhesive overflow of the first sealing member 231.

In this embodiment, the sealing member can be activated to form a seal through a combination of heat melting and pressure. The melted adhesive layer has good fluidity, enabling uniform filling of surface micropores of the connecting piece 220 and the electrode terminal 210, improving the sealing effect. Moreover, the pressure applied to the electrode terminal 210 is small, allowing the size of the electrode terminal 210 to be set smaller, suitable for thinner electrochemical apparatuses.

In some embodiments, the melting point T1 of the first adhesive layer 2311, the melting point T2 of the second adhesive layer 2312, and the melting point T3 of the third adhesive layer 2313 satisfy 100°C ≤ T1 ≤ 130°C, 140°C ≤ T2 ≤ 190°C, and 100°C ≤ T3 ≤ 130°C. For example, T1 may be 100°C, 110°C, 130°C, or the like, T2 may be 140°C, 170°C, 190°C, or the like, and T3 may be 100°C, 120°C, 130°C, or the like.

In some embodiments, a thickness of the sealing member is H, satisfying 0.05 mm ≤ H ≤ 1 mm. For example, H may be 0.05 mm, 0.5 mm, 1 mm, or the like.

Setting the thickness of the sealing member to H, satisfying 0.05 mm ≤ H ≤ 1 mm, can ensure that the sealing member is not easily damaged, not easily permeable to water, and the electrochemical apparatus 10 has a good pressure relief effect during thermal runaway. If H is small (for example, less than 0.05 mm), the sealing member is prone to damage and has high water permeability, which makes it likely for moisture to penetrate into the housing 100, affecting the internal structure of the housing 100. If H is large (for example, greater than 1 mm), the sealing member is difficult to melt during thermal runaway of the electrochemical apparatus 10, resulting in lower pressure relief sensitivity of the electrochemical apparatus 10.

In some embodiments, a thickness of the first adhesive layer 2311 is H1, a thickness of the second adhesive layer 2312 is H2, and a thickness of the third adhesive layer 2313 is H3, satisfying H1:H2:H3 = 1:0.5 to 3:1. For example, H1:H2:H3 may be 1:0.5:1, 1:1:1, 1:3:1, or the like.

By making the thickness H1 of the first adhesive layer 2311, the thickness H2 of the second adhesive layer 2312, and the thickness H3 of the third adhesive layer 2313 satisfy H1:H2:H3 = 1:0.5 to 3:1, first the second adhesive layer 2312 can provide good support for the first adhesive layer 2311 and the third adhesive layer 2313, and second, the space occupied by the sealing member can be small, thereby allowing for a small volume of the portion of the electrode lead-out assembly 200 protruding from the housing 100, and thus reducing the space occupied by the electrochemical apparatus 10. Additionally, this can ensure good adhesion force between the first adhesive layer 2311 and the connecting piece 220 and between the second adhesive layer 2312 and the electrode terminal 210, resulting in good sealing performance of the electrochemical apparatus 10.

In some other embodiments, the sealing member includes a first adhesive layer and a second adhesive layer that are stacked, the first adhesive layer is connected to the connecting piece 220, the second adhesive layer is connected to the electrode terminal 210, and a melting point of the first adhesive layer is lower than a melting point of the second adhesive layer.

By providing the first adhesive layer and the second adhesive layer that are stacked, connecting the first adhesive layer to the connecting piece 220, connecting the second adhesive layer to the electrode terminal 210, and making the melting point of the first adhesive layer lower than the melting point of the second adhesive layer, during thermal runaway of the electrochemical apparatus 10, the first adhesive layer can melt to form a pressure relief channel, allowing for high pressure relief sensitivity of the electrochemical apparatus 10, while the second adhesive layer is less likely to melt, reducing the amount of adhesive overflow of the sealing member.

In some other embodiments, the sealing member includes a single adhesive layer, the adhesive layer is connected to the connecting piece 220 and the electrode terminal 210, and a melting point of the adhesive layer is T, satisfying 100°C ≤ T ≤ 130°C. For example, T may be 100°C, 110°C, 130°C, or the like.

By providing the single adhesive layer, connecting the adhesive layer to both the connecting piece 220 and the electrode terminal 210, and making the melting point T of the adhesive layer satisfy 100°C ≤ T ≤ 130°C, it is easy for the adhesive layer to be activated by high temperature to melt so as to fit with both the connecting piece 220 and the electrode terminal 210. Moreover, during thermal runaway of the electrochemical apparatus 10, the adhesive layer melts, and a pressure relief channel can be formed on both the side of the adhesive layer fitting with the connecting piece 220 and the side of the adhesive layer fitting with the electrode terminal 210, allowing for higher pressure relief sensitivity of the electrochemical apparatus 10.

According to some embodiments of the present application, an embodiment of the present application further provides an electric device, including the electrochemical apparatus 10 according to any of the above solutions, where the electrochemical apparatus 10 is configured to provide electric energy to the electric device.

The electric device may be any device or system that uses the electrochemical apparatus 10 described above.

It should be noted that, without conflict, the embodiments and features in the embodiments of the present application can be combined with each other.

The above are only preferred embodiments of the present application and are not intended to limit the present application. For those skilled in the art, the present application may have various modifications and changes. Any modifications, equivalent substitutions, improvements, or the like, made within the spirit and principles of the present application shall be included in the scope of protection of the present application.

## Claims

1. An electrochemical apparatus, comprising:
a housing, wherein a first through hole is provided on a wall portion of the housing; and
an electrode lead-out assembly, wherein the electrode lead-out assembly comprises an electrode terminal, a connecting piece, and at least one sealing member, the connecting piece is a metal piece, the connecting piece is connected to the wall portion, a second through hole is provided on the connecting piece, the electrode terminal runs through the second through hole, and the sealing member is disposed between the connecting piece and the electrode terminal.

2. The electrochemical apparatus according to claim 1, wherein a passivation layer is formed on a surface of the connecting piece, and the sealing member is bonded to the passivation layer.

3. The electrochemical apparatus according to claim 1, wherein the electrode terminal comprises a first conductive member, a second conductive member, and a third conductive member, the first conductive member is located on a first side of the connecting piece along a thickness direction thereof, the second conductive member is located on a second side of the connecting piece along the thickness direction thereof opposite to the first side, the third conductive member runs through the second through hole, and the third conductive member is electrically connected to the first conductive member and the second conductive member; and
the sealing member comprises a first sealing member and a second sealing member, wherein the first sealing member is disposed between the first conductive member and the connecting piece, and the second sealing member is disposed between the second conductive member and the connecting piece.

4. The electrochemical apparatus according to claim 3, wherein the first conductive member and the third conductive member are integrally formed, a insertion hole is provided on the second conductive member, and a portion of the third conductive member is inserted into the insertion hole, and is electrically connected to the second conductive member within the insertion hole.

5. The electrochemical apparatus according to claim 4, wherein the third conductive member comprises a first portion and a second portion that are connected, the first portion is inserted into the insertion hole, the second portion is located between the first portion and the first conductive member, a cross-sectional area of the first portion is smaller than a cross-sectional area of the second portion, so that a step surface is formed between the first portion and the second portion, and the second conductive member abuts against the step surface.

6. The electrochemical apparatus according to claim 4, wherein the third conductive member has a first end surface facing away from the first conductive member, the second conductive member has a second end surface facing away from the first conductive member, and the first end surface is flush with the second end surface.

7. The electrochemical apparatus according to claim 3, wherein the first conductive member and the third conductive member are integrally formed, the third conductive member has a first end surface facing away from the first conductive member, the second conductive member has a third end surface facing toward the first conductive member, and the first end surface fits with the third end surface to achieve electrical connection.

8. The electrochemical apparatus according to claim 4 or 7, wherein the first conductive member is disposed on an inner side of the wall portion; or
the first conductive member is disposed on an outer side of the wall portion.

9. The electrochemical apparatus according to claim 3, wherein a first insertion hole is provided on the first conductive member, a second insertion hole is provided on the second conductive member, a portion of the third conductive member is inserted into the first insertion hole and electrically connected to the first conductive member within the first insertion hole, and a portion of the third conductive member is inserted into the second insertion hole and electrically connected to the second conductive member within the second insertion hole.

10. The electrochemical apparatus according to claim 3, wherein the first sealing member and/or the second sealing member extends into the second through hole.

11. The electrochemical apparatus according to claim 3, wherein in a direction perpendicular to a centerline of the second through hole, a width of a portion of the connecting piece protruding from an outer peripheral surface of the first sealing member is S1, and a width of a portion of the connecting piece protruding from an outer peripheral surface of the second sealing member is S2, satisfying S1 ≥ 0.3 mm and S2 ≥ 0.3 mm.

12. The electrochemical apparatus according to claim 3, wherein in an overlapping region of the first conductive member and the connecting piece, a width of the first sealing member is D1; and in an overlapping region of the second conductive member and the connecting piece, a width of the second sealing member is D2, satisfying 0.2 mm ≤ D1 ≤ 1.5 mm, and 0.2 mm ≤ D2 ≤ 1.5 mm.

13. The electrochemical apparatus according to claim 12, wherein 0.3 mm ≤ D1 ≤ 1 mm, and 0.3 mm ≤ D2 ≤ 1 mm.

14. The electrochemical apparatus according to claim 1, wherein the sealing member comprises a first adhesive layer, a second adhesive layer, and a third adhesive layer sequentially stacked, the first adhesive layer is connected to the connecting piece, the third adhesive layer is connected to the electrode terminal, and melting points of the first adhesive layer and the third adhesive layer are lower than a melting point of the second adhesive layer.

15. The electrochemical apparatus according to claim 14, wherein a thickness of the sealing member is H, satisfying 0.05 mm ≤ H ≤ 1 mm, a thickness of the first adhesive layer is H1, a thickness of the second adhesive layer is H2, and a thickness of the third adhesive layer is H3, satisfying H1:H2:H3 = 1:0.5 to 3:1.

16. The electrochemical apparatus according to claim 1, wherein the sealing member comprises a first adhesive layer and a second adhesive layer that are stacked, the first adhesive layer is connected to the connecting piece, the second adhesive layer is connected to the electrode terminal, and a melting point of the first adhesive layer is lower than a melting point of the second adhesive layer.

17. The electrochemical apparatus according to claim 1, wherein the sealing member comprises a single adhesive layer, the adhesive layer is connected to both the connecting piece and the electrode terminal, and a melting point of the adhesive layer is T, satisfying 100°C ≤ T ≤ 130°C.

18. An electric device, comprising the electrochemical apparatus according to any one of claims 1 to 17, wherein the electrochemical apparatus is configured to provide electric energy.
